# EUROPÄISCHE PATENTANMELDUNG

(11) **EP 3 715 822 A1**
(43) Veröffentlichungstag der Anmeldung: **30.09.2020**
(21) Anmeldenummer: 20163009.2
(22) Anmeldetag: 13.03.2020
(51) Int. Cl.: G01M 17/06, G01M 99/00

(54) **SYSTEM ZUM PRÜFEN DER ROLLEN EINES ROLLBEHÄLTERS**

(30) Priorität: 29.03.2019 DE 102019108206; 09.05.2019 DE 102019112092
(71) Anmelder: Pilsl Transportgeräte GmbH, 94110 Wegscheid (DE)
(72) Erfinder: Pilsl, Christian, 94107 Untergriesbach (DE)
(74) Vertreter: advotec.

(57) **Zusammenfassung**

Die Erfindung betrifft ein System (1) zum Prüfen der Funktionsfähigkeit der Lenkrollen (2) und/oder Bockrollen (3) eines Rollbehälters, insbesondere einer Rollpalette (4) für Lebensmittel- und Supermärkte, umfassend mindestens eine Einrichtung (17) zur Ermittlung der Drehbeweglichkeit der Lenk- und Bockrollen (2, 3) um deren Rollen-Drehachse sowie mindestens eine Einrichtung (21) zur Ermittlung der Schwenkbeweglichkeit der Lenkrollen (2) um eine Vertikalachse.

## Beschreibung

Die vorliegende Erfindung betrifft ein System zum Prüfen der Funktionsfähigkeit der Lenkrollen und/oder Bockrollen eines Rollbehälters, insbesondere einer Rollpalette für Lebensmittel- und Supermärkte.

Rollbehälter, wie beispielsweise Rollpaletten für Lebensmittel- und Supermärkte weisen in der Regel zwei Lenkrollen und zwei Bockrollen auf. Unter einer Bockrolle versteht man eine nicht um eine Vertikalachse schwenkbare Rolle, welche Bewegungen lediglich in eine Richtung ausführen können. Lenkrollen dagegen sind auch um eine vertikale Achse schwenkbar. In der Regel bestehen Bock- und Lenkrollen aus einem Rahmen, z. B. aus Blech, und einem oder mehreren darin eingesetzten Rädern. In der Regel schneidet sich die Rollen-Drehachse einer Lenkrolle nicht mit ihrer vertikalen Drehachse. Vielmehr haben die beiden Achsen einen gewissen Abstand, auch Nachlauf genannt, zueinander, so dass die Rollen nachgeschleppt werden.

Es sind auch Rollpaletten bekannt, die ausschließlich Bockrollen aufweisen. Derartige Rollpaletten können dann nur in eine Richtung gefahren werden. Auch sind Rollpaletten bekannt, die ausschließlich Lenkrollen aufweisen.

Rollbehälter, wie beispielsweise Rollpaletten oder Rollcontainer dienen dem Transport meist größerer Mengen an Transportgut, wie beispielsweise von Lebensmitteln. Hierzu werden die Rollpaletten durch eine Person oder auch durch ein automatisiertes System beladen. Nach dem Beladen werden die Rollpaletten i. d. R. durch Verschieben an einen bestimmten Ort, wie beispielsweise auf einen LKW verbracht.

Hierbei wird man immer wieder mit dem Problem konfrontiert, dass eine oder mehrere der Rollen der Rollpalette nicht oder nicht richtig funktionieren. So kommt es immer wieder vor, dass sich die Lenk- und/oder Bockrollen nicht um ihre Rollen-Drehachse drehen lassen und ganz oder teilweise blockieren. Eine weitere, öfter vorkommende Störung besteht darin, dass sich die Lenkrollen nicht oder nur eingeschränkt um die Vertikalachse verschwenken lassen. Derartige Funktionsstörungen kommen beispielsweise dann vor, wenn sich Schnüre in den betreffenden Rollen verfangen.

Bemerkt nun eine Bedienperson, dass die Funktion einer oder mehrerer Rollen gestört ist, muss die vorher beladene Palette meist wieder völlig entladen werden, um die defekte Rollen bzw. die defekten Rollen zu ersetzen oder zu reparieren. Dies ist mit einem großen Aufwand verbunden. Im Leerzustand der Palette werden Funktionsstörungen an den Rollen oft nicht bemerkt.

Der vorliegenden Erfindung liegt die Aufgabe zugrunde, die oben geschilderten Nachteile aus dem Stand der Technik zu überwinden.

Diese Aufgabe wird erfindungsgemäß durch ein System mit den Merkmalen des Anspruchs 1 gelöst.

Mit dem erfindungsgemäßen System ist es nun möglich, sowohl die Drehbeweglichkeit von Lenk- und Bockrollen eines Rollbehälters um deren Rollen-Drehachse sowie die Schwenkbeweglichkeit der Lenkrollen um eine Vertikalachse zu ermitteln. Wird ein derartiges System beispielsweise einer Automatisierung vorgeschaltet, können defekte Rollen bereits vor dem automatischen Beladen einer Rollpalette repariert oder ersetzt werden. Dies erspart viel Mühe und Zeit.

Mit Vorteil handelt es sich bei der Einrichtung zur Ermittlung der Drehbeweglichkeit der Lenk- und Bockrollen um deren Rollen-Drehachse um eine Einrichtung zur Messung des Rollwiderstandes, insbesondere umfassend einen Kraftaufnehmer, z. B. eine Kraftmessdose, sowie vorzugsweise ein mit dem Kraftaufnehmer gekoppeltes Betätigungselement. Bei einer bevorzugten Ausführungsform des erfindungsgemäßen Systems handelt es sich bei dem mit dem Kraftaufnehmer gekoppelten Betätigungselement um eine schwimmend bewegbare Platte und/oder ein Förderband und/oder um rotierbare Rollen. Mit derartigen Betätigungselementen ist es in Verbindung mit einem Kraftaufnehmer auf äußerst einfache Art und Weise möglich, die Drehbeweglichkeit von Lenk- und Bockrollen um deren Rollen-Drehachse zu ermitteln. Alternativ zu einem Kraftaufnehmer ist es auch möglich, lediglich die Stromaufnahme des Antriebsmotors zu messen, die nötig ist, um eine Rolle um deren Drehachse zu bewegen.

Mit Vorteil umfasst die Einrichtung zur Ermittlung der Schwenkbeweglichkeit der Lenkrollen um eine Vertikalachse eine Verschwenkvorrichtung zur Verschwenkung der Laufrollen um eine Vertikalachse, insbesondere einen mittels eines Motors rotierbaren Drehteller, welche Verschwenkvorrichtung mit einer Messvorrichtung zur Messung des Rotationswiderstands, insbesondere mit einer Drehmomentmesszelle, die vorzugsweise eine Drehmomentmesswelle umfasst, gekoppelt ist. Auch hier ist es denkbar, dass lediglich die Stromaufnahme des Antriebsmotors gemessen wird, welche für eine Verschwenkung nötig ist.

Mit Vorteil weist die Verschwenkvorrichtung eine Halteeinrichtung zur reversiblen Fixierung einer Lenkrolle auf, wobei die Halteeinrichtung vorzugsweise zwei sich gegenüberstehende Haltebacken oder Halteleisten umfasst, die insbesondere pneumatisch aufeinander zu bzw. voneinander weg bewegbar sind. Mit einer derartigen Halteeinrichtung ist es möglich, eine Lenkrolle sicher zu fixieren, um diese um ihre Vertikalachse verschwenken zu können.

Mit Vorteil ist die Verschwenkvorrichtung, insbesondere der rotierbare Drehteller sowohl in als auch entgegen des Uhrzeigersinns rotierbar, wobei eine auf der Verschwenkvorrichtung positionierte Lenkrolle vorzugsweise um 360° in beide Richtungen verschwenkbar ist. Auf diese Art und Weise ist es möglich, die Funktionsfähigkeit einer Lenkrolle optimal zu testen.

Eine bevorzugte Variante des erfindungsgemäßen Systems ist durch eine Krafterzeugungsvorrichtung zur Erzeugung von Kraft auf die zu prüfenden Rollen gekennzeichnet, wobei die Krafterzeugungsvorrichtung insbesondere eine auf einen Boden eines Rollbehälters drückbare, insbesondere pneumatisch bewegbare Pressplatte umfasst. Durch eine derartige Krafterzeugungsvorrichtung ist eine besonders genaue Prüfung der Drehbeweglichkeit der Rollen um deren Rollen-Drehachse möglich. Besonders gut wirkt eine derartige Krafterzeugungsvorrichtung mit einer schwimmend bewegbaren Platte als Bestätigungselement zusammen. Dies ist in der nachfolgenden Figurenbeschreibung detailliert dargestellt.

Eine besonders bevorzugte Ausführungsform des erfindungsgemäßen Systems ist durch eine Vorrichtung zum Bewegen eines zu prüfenden Rollbehälters, insbesondere zum Verfahren eines Rollbehälters auf einer Prüfstrecke des Systems gekennzeichnet, wobei die Vorrichtung vorzugsweise einen auf einer Führungsschiene verfahrbaren Schlitten umfasst, welcher eine Halteeinrichtung zum Halten des zu verfahrenden Rollbehälters umfasst. Mit einer derartigen Vorrichtung ist es möglich, einen zu prüfenden Rollbehälter automatisch auf einer Prüfstrecke des Systems zu bewegen, um so die Rollen des Rollbehälters zu prüfen.

Vorzugsweise ist das erfindungsgemäße System durch zwei Führungsschienen zum Führen von zu prüfenden Rollen eines Rollbehälters gekennzeichnet. Durch derartige Führungsschienen kann der zu prüfende Rollbehälter exakt in Spur gehalten werden.

Mit Vorteil ist das erfindungsgemäße System durch eine Vorrichtung zur Verschwenkung von zu prüfenden Lenkrollen um 180° gekennzeichnet, wobei diese Vorrichtung vorzugsweise als rotierbarer Drehteller ausgebildet ist. In der Regel wird ein derartiger Drehteller einem oben beschriebenen Drehteller zur Ermittlung der Schwenkbeweglichkeit der Lenkrollen um eine Vertikalachse nachgeschaltet. Dieser nachgeschaltete Drehteller dient in erster Linie dazu, durch Verschwenken der Lenkrollen um 180° den zu prüfenden Rollbehälter in die entgegengesetzte Richtung auf der Prüfstrecke zu verfahren, um Rollbehälter mit funktionsgestörten Rollen wieder nach vorne und schließlich aus dem System zu bewegen.

Die vorliegende Erfindung betrifft ferner ein Verfahren zur Prüfung der Funktionsfähigkeit der Lenkrollen und/oder Bockrollen eines Rollbehälters, insbesondere mittels eines erfindungsgemäßen Systems, umfassend folgende Schritte:
- Ermittlung der Drehbeweglichkeit der Lenk- und/oder Bockrollen um deren Rollen-Drehachse durch Messung des Rollwiderstands der Lenk- und/oder Bockrollen beim Rotieren der Lenk- und/oder Bockrollen auf einem Untergrund;
- Ermittlung der Schwenkbeweglichkeit der Lenkrollen um eine Vertikalachse durch Verschwenken der Lenkrollen um eine Vertikalachse und Messung des Rotationswiderstandes beim Verschwenken der Lenkrollen um die Vertikalachse.

Mit dem erfindungsgemäßen Verfahren werden ebenfalls die o. g. Vorteile erzielt. In der Regel wird zumindest bei der Ermittlung der Drehbeweglichkeit der Lenk- und/oder Bockrollen um deren Rollen-Drehachse mittels einer Krafterzeugungsvorrichtung eine Kraft auf die zu prüfenden Rollen ausgeübt, wobei diese Kraft vorzugsweise dadurch erzeugt wird, dass die Krafterzeugungsvorrichtung, die insbesondere eine bewegbare Pressplatte umfasst, auf eine Oberseite eines Bodens des Rollbehälters gepresst wird. Dadurch ist es besonders gut möglich, die Drehbeweglichkeit der zu prüfenden Rollen zu ermitteln.

In der Regel wird ein Rollbehälter zur Prüfung der Funktionsfähigkeit seiner Rollen mittels eines horizontal verfahrbaren Führungsschlittens auf einem Untergrund bewegt, wobei die Rollen des Rollbehälters vorzugsweise auf dem Untergrund mittels Führungselementen, insbesondere mittels Führungsschienen geführt werden.

In der Regel werden die Lenkrollen zur Änderung der Laufrichtung um 180° um eine Vertikalachse verschwenkt und anschließend in die entgegengesetzte Richtung verfahren.

Mit Vorteil erfolgt das Messen des Rotationswiderstandes beim Verschwenken der Lenkrollen um die Vertikalachse mittels einer Messvorrichtung zur Messung des Rollwiderstandes, insbesondere mittels einer Drehmomentmesszelle, die vorzugsweise eine Drehmomentmesswelle umfasst, mittels eines überfederten Stößels mit Endschalter, durch ein Gegenlager des Motors mit beliebigem Kraftaufnehmer, mittels Dehnmessstreifen und/oder durch Messen der Stromaufnahme eines Motors.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: Eine perspektivische Darstellung eines erfindungsgemäßen Systems mit Rollpalette;
- Fig. 2:: eine Vorderansicht des Systems gemäß Figur 1;
- Fig. 3:: eine Draufsicht des Systems gemäß Figur 1 (ohne Rollpalette);
- Fig. 4:: eine Seitenansicht einer Hälfte des Systems gemäß Figur 1 (ohne Rollpalette);
- Fig. 5:: einen vergrößerten Ausschnitt aus dem System gemäß Figur 1 im Bereich einer Bewegungseinrichtung vor einer Kontaktierung der Rollpalette;
- Fig. 6:: den vergrößerten Ausschnitt gemäß Figur 5, wobei die Bewegungseinrichtung die Rollpalette jetzt kontaktiert;
- Fig. 7:: eine weitere Darstellung der Situation von Figur 6;
- Fig. 8:: einen vergrößerten Ausschnitt aus dem System gemäß Figur 1 im Bereich einer Einrichtung zur Ermittlung der Drehbeweglichkeit der zu prüfenden Rollen um deren Rollen-Drehachse;
- Fig. 9:: einen vergrößerten Ausschnitt aus dem System gemäß Fig. 1 im Bereich einer Einrichtung zur Ermittlung der Schwenkbeweglichkeit der zu prüfenden Lenkrollen um deren Vertikalachse.

Nachfolgend werden gleiche oder funktionsgleiche Elemente mit denselben Bezugszeichen gekennzeichnet.

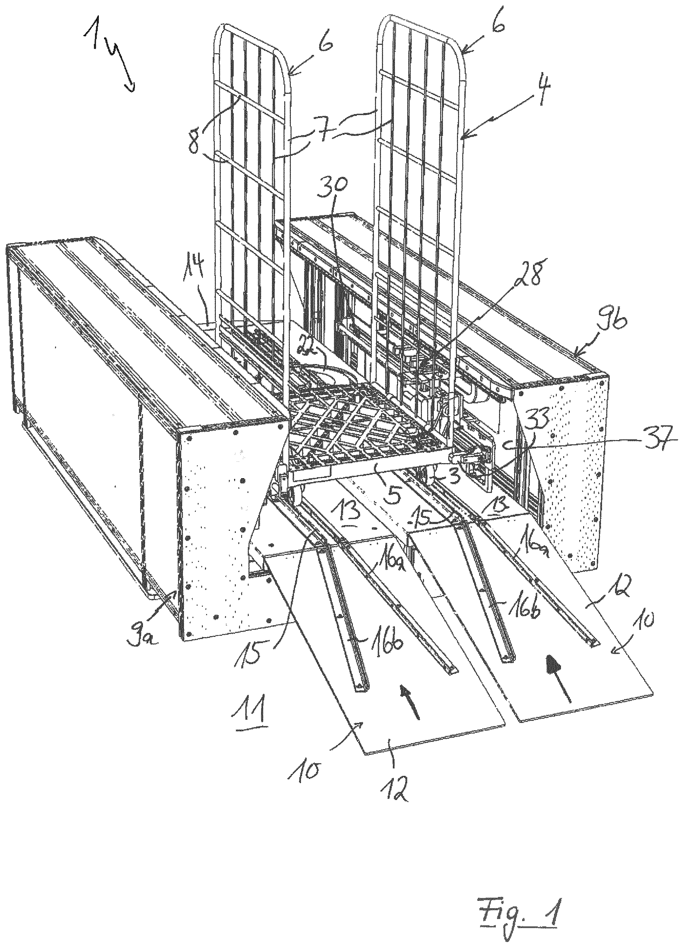

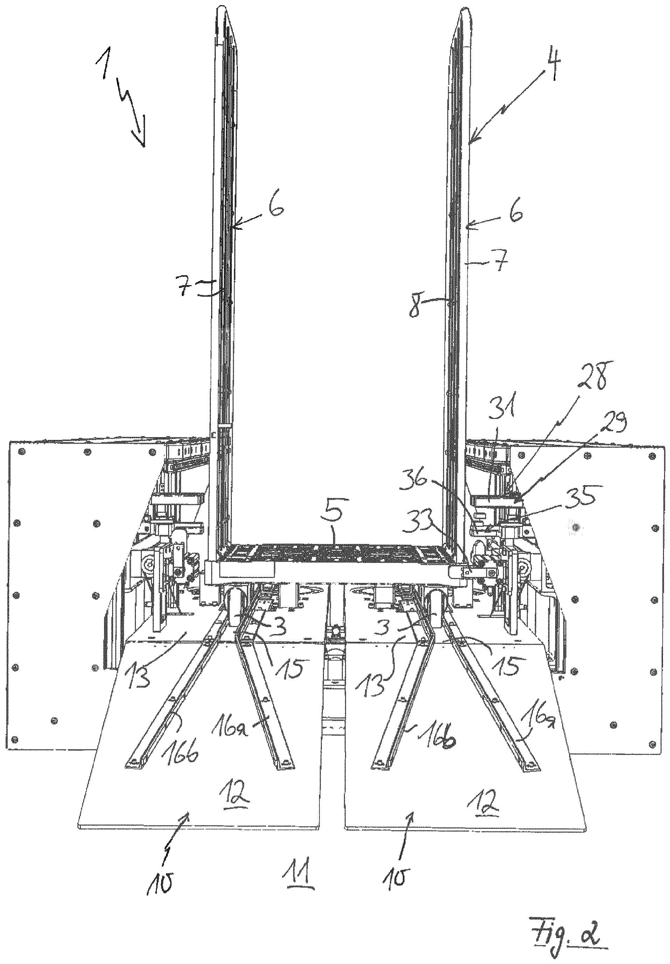

In den Figuren 1 bis 4 sind verschiedene Perspektiven eines erfindungsgemäßen Systems 1 dargestellt. Das erfindungsgemäße System 1 dient der Prüfung der Funktionsfähigkeit der vorderen Lenkrollen 2 und der hinteren Bockrollen 3 einer Rollpalette 4. Die Rollpalette 4 umfasst einen Palettenboden 5 sowie zwei Palettengitter 6, welche vertikal angeordnete Stäbe 7 und horizontal angeordnete Stäbe 8 umfassen.

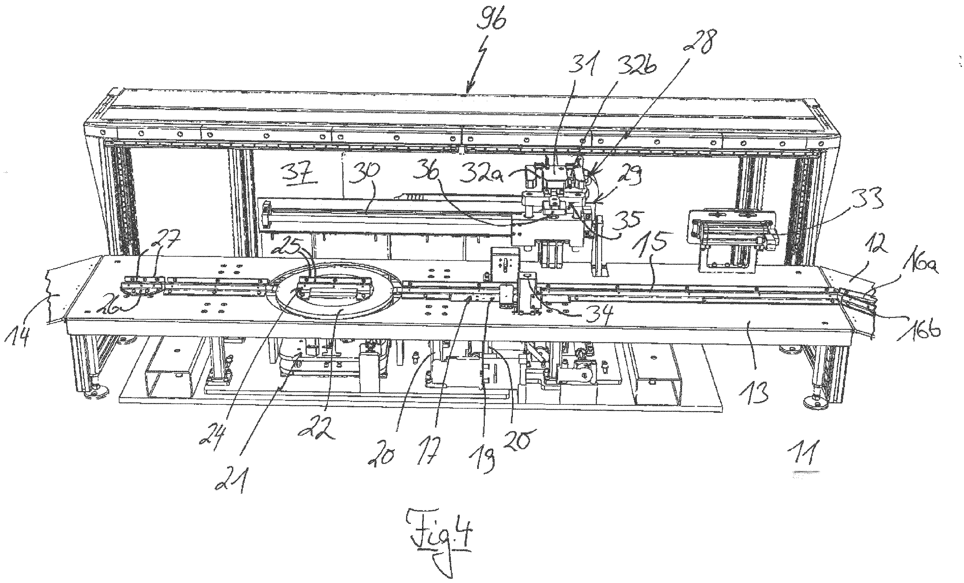

Das System 1 umfasst zwei Teilblöcke 9a und 9b, welche im Wesentlichen identische Elemente aufweisen. Figur 4 zeigt eine Seitenansicht des rechten Teilblocks 9b des erfindungsgemäßen Systems 1, wobei hier eine Prüfspur (linker Teilblock 9a) weggelassen wurde. Jeder Block 9a und 9b umfasst eine Laufbahn 10. Auf diesen Laufbahnen 10 wird die Rollpalette 4 zur Prüfung der Lenkrollen 2 und Bockrollen 3 verfahren. Jede Laufbahn 10 umfasst einen von einem Untergrund 11 schräg nach oben führenden Auffahrabschnitt 12 auf, an welchen sich jeweils ein Prüfabschnitt 13 anschließt. Am Ende des Prüfabschnitts 13 schließt sich jeweils ein Abfahrabschnitt an, über welchen eine fertig geprüfte Rollpalette vom System 1 abtransportiert wird. Jede Laufbahn 10 weist eine Führungsschiene 15 auf, wobei jede Führungsschiene 15 eine rechte Führungsleiste 16a und eine linke Führungsleiste 16b umfasst. Auf den Auffahrabschnitten 12 sind die Führungsleisten 16a und 16b aufeinander zulaufend angeordnet, wobei die Führungsleisten 16a und 16b auf dem jeweiligen Prüfabschnitt 13 parallel zueinander angeordnet sind und einen derartigen Abstand aufweisen, dass die zu prüfenden Rollen 2 und 3 zwischen den Führungsleisten 16a und 16b geführt verfahren werden können.

Durch die Tatsache, dass die Führungsleisten 16a und 16b im Bereich der Auffahrabschnitte 12 aufeinander zulaufend angeordnet sind, ist es für eine Bedienperson einfacher, die zu prüfende Rollpalette 4 in die durch die Führungsleisten 16a und 16b im Prüfabschnitt 13 vorgegebene Fahrspur zu bringen. Zwei Schwenkspanner 33 verhindern ein Zurückrollen der Rollpalette 4 in Richtung der Auffahrabschnitte 12. Ein ein- und ausfahrbarer Stift 34 dient als Anschlag beim Hinaufschieben der Rollpalette 4 auf die Prüfabschnitte 13 und sorgen für eine optimale Position der Rollpalette 4 beim Greifen derselben durch die Halteeinrichtung 31.

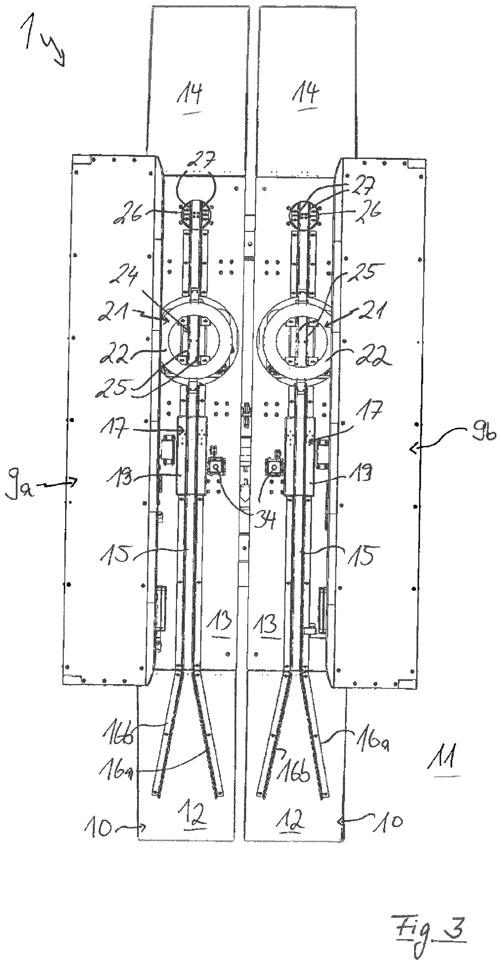

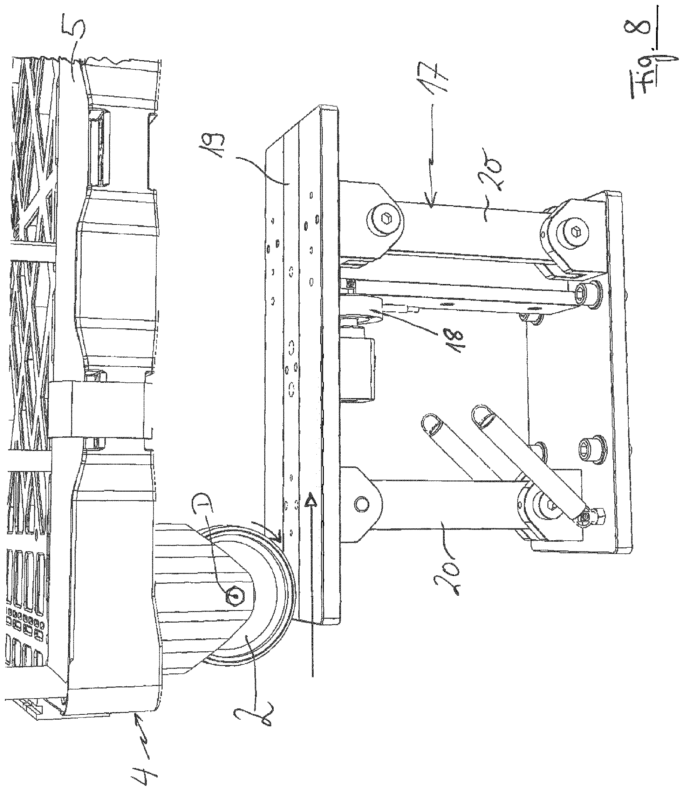

Wie insbesondere in Figur 3 gut zu erkennen ist, erreichen beim Verfahren der Rollpalette 4 auf dem jeweiligen Prüfabschnitt 13 zunächst die beiden vorderen Lenkrollen 2 die erste Prüfstation, nämlich die Einrichtung 17 zur Ermittlung der Drehbeweglichkeit der Rollen um deren Rollen-Drehachsen. Die Einrichtung 17 ist in Figur 8 im Detail dargestellt. Bei dieser Einrichtung 17 handelt es sich um eine Einrichtung zur Messung des Rollwiderstands der Rollen, die eine Kraftmessdose 18 sowie ein mit der Kraftmessdose 18 gekoppeltes Bestätigungselement in Form einer schwimmend bewegbaren Platte 19 umfasst. Die Platte 19 ist mit zwei verschwenkbaren Hebeln 20 gelenkig verbunden. Die Platte 19 weist eine derartige Länge auf, dass eine zu prüfende Rolle mindestens einmal komplett auf der Platte 19 um ihre Rollen-Drehachse D rotiert werden kann. Wird nun eine Rolle über die Platte 19 geschoben, wird diese, abhängig vom Rollwiderstand der Rolle mehr oder weniger stark in Fahrtrichtung der Rolle (siehe Pfeil in Fig. 8) verschoben, indem die mit der Platte 19 gelenkig verbundenen Hebel 20 ebenfalls in diese Richtung verschwenkt werden. Die Kraft, die benötigt wird, um die Rolle zu bewegen, wird durch die Kraftmessdose 18 ermittelt. Überschreitet der Rollwiderstand eine gewisse Grenze, ist einer Bedienperson klar oder wird dieser signalisiert, dass eine Beeinträchtigung der Drehbeweglichkeit der betreffenden Rolle um deren Rollen-Drehachse vorliegt und diese repariert bzw. ausgetauscht werden muss. Ist die benötigte Kraft beim Überfahren der Platte 19 entsprechend gering (wie in Fig. 8 der Fall), liegt auch keine Beeinträchtigung der Drehbeweglichkeit vor.

Beim Weiterschieben der Rollpalette 4 auf den Laufbahnen 10 erreichen die beiden Lenkrollen 2 die Einrichtung 21 zur Ermittlung der Schwenkbeweglichkeit der Lenkrollen 2 um eine Vertikalachse V. Diese Einrichtung 21 umfasst einen mittels eines Motors rotierbaren Drehteller 22, welcher mit einer Drehmomentmesszelle 23 gekoppt ist. Die Drehmomentmesszelle 23 umfasst eine Drehmomentmesswelle.

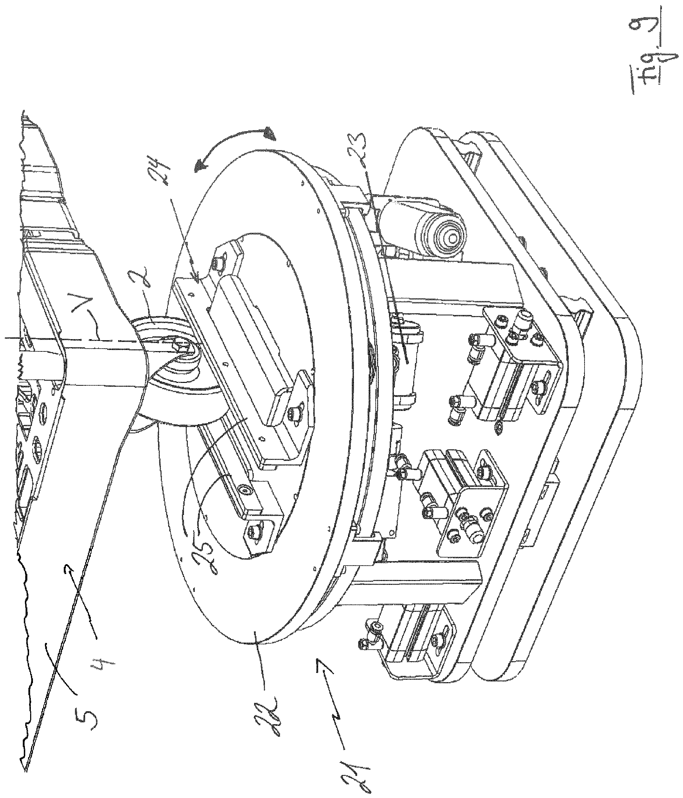

Die Einrichtung 21 ist in Figur 9 vergrößert dargestellt. Der Drehteller 22 umfasst eine Halteeinrichtung 24 zur reversiblen Fixierung einer Lenkrolle 2. Diese Halteeinrichtung 24 umfasst zwei sich gegenüberstehende Halteleisten 25, die pneumatisch aufeinander zu bzw. voneinander weg bewegbar sind. Die Halteleisten 25 sind zunächst fluchtend zu den Führungsleisten 16a und 16b der Führungsschienen angeordnet, damit die zu prüfenden Lenkrollen zwischen die beiden Halteleisten 25 fahren können. Befindet sich eine zu prüfende Rolle zwischen den Halteleisten 25, so werden diese pneumatisch aufeinander zubewegt, bis diese die zu prüfende Lenkrolle 2 fest kontaktieren, um diese zwischen den Halteleisten 25 sicher halten zu können. Anschließend wird der Drehteller 22 zunächst um 360° im Uhrzeiger rotiert. Anschließend erfolgt eine Rotation um 360° entgegen des Uhrzeigersinns (siehe Doppelpfeil in Fig. 9). Überschreitet der durch die Drehmomentmesszelle gemessene Rotationswiderstand eine bestimmte Grenze, so ist einer Bedienperson klar oder wird dieser signalisiert, dass die Schwenkbeweglichkeit der betreffenden Lenkrolle 2 um ihre Vertikalachse beeinträchtigt ist und diese daher repariert oder ausgetauscht werden muss.

Beim Weiterschieben der Rollpalette 4 erreichen schließlich auch die beiden Bockrollen 3 die Einrichtung 17 zur Ermittlung der Drehbeweglichkeit derselben um ihre Rollen-Drehachse. Hier wird analog zur bereits oben beschriebenen Ermittlung der Drehbeweglichkeit der Lenkrollen 2 vorgegangen.

Schließlich erreichen die Lenkrollen 2 jeweils einen am Ende der Prüfabschnitte 13 der Laufbahnen 10 angeordneten Drehteller 26, welche ebenfalls jeweils zwei Halteleisten 27 umfassen. Auch die Halteleisten 27 sind zunächst fluchtend zu den Führungsleisten 16a, 16b der Führungsschienen 15 angeordnet. Befinden sich die Lenkrollen 2 schließlich zwischen den beiden Halteleisten 27 der Drehteller 26, kommt es zu einer Verschwenkung der Lenkrollen um deren Vertikalachse um 180°, falls vorher eine Rollenfunktionsstörung ermittelt wurde. In diesem Fall wird die Rollpalette 4 anschließend in die entgegengesetzte Richtung, also in Richtung des Auffahrabschnitts 12 bewegt und aus dem System befördert. Anschließend können die defekten Rollen repariert oder ausgetauscht werden.

Wurden keine funktionsgestörten Rollen ermittelt, bleiben die o.g. Drehteller inaktiv und die Rollpalette 4 wird über den Abfahrabschnitt 14 aus dem System geschoben und steht dann für weitere Arbeiten, insbesondere einem Beladen zur Verfügung.

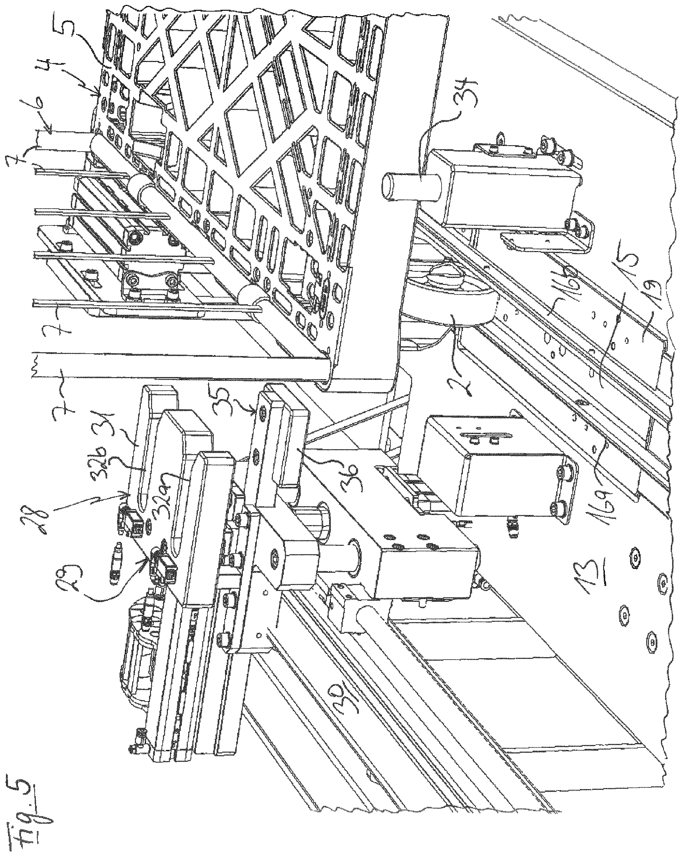

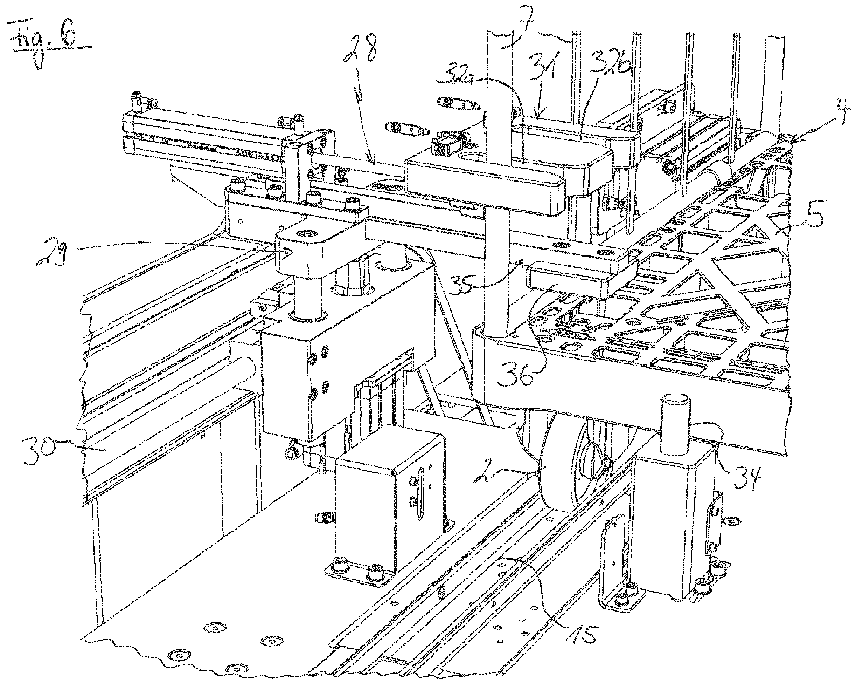

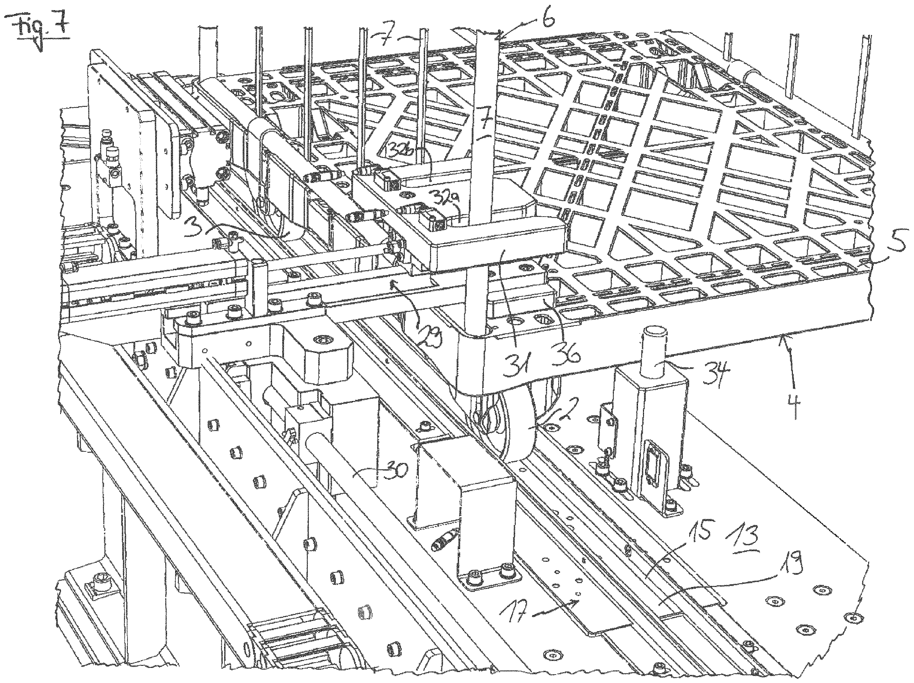

Die Rollpalette 4 wird auf den Prüfabschnitten 13 der Laufbahnen 10 automatisch durch eine Vorrichtung 28 bewegt, welche einen auf einer Führungsschiene 30 verfahrbaren Schlitten 29 umfasst. Der verfahrbare Schlitten 29 umfasst eine Halteeinrichtung 31 zum Halten des zu verfahrenden Rollbehälters 4. Die Halteeinrichtung 31 umfasst zwei Haltebuchten 32a, 32b, welche eine derartige Breite aufweisen, dass ein vertikal angeordneter Stab 7 eines Palettengitters 6 der Rollpalette 4 in eine Haltebucht 32a, 32b aufgenommen werden kann. Die Verfahrvorrichtung 28 ist in den Figuren 5, 6 und 7 vergrößert dargestellt. In Figur 5 besteht noch kein Kontakt zwischen der Halteeinrichtung 31 und dem Palettengitter 6 der Rollpalette 4. Zum Kontaktieren und Verfahren der Rollpalette 4 wird die Halteinrichtung 31 zunächst horizontal in Richtung des Palettengitters 6 pneumatisch verfahren, sodass der erste vertikal angeordnete Stab 7, welcher dicker ausgebildet als die folgenden Stäbe 7, in der ersten Haltebucht 32a der Halteeinrichtung 31 aufgenommen wird. Diese Situation ist auch in Figur 7 gut zu erkennen. Der identische Vorgang findet auch auf der anderen Seite der Palette statt. Es weisen nämlich beide Systemblöcke 9a und 9b eine oben beschriebene Verfahrvorrichtung 28 auf. Anschließend wird der Schlitten 29 entlang der Führungsschiene 30 zusammen mit der Rollpalette 4 in Richtung der Abfahrabschnitte 14 verfahren. Die beiden Verfahrvorrichtungen 28 sind an Seitenwänden 37 des Systems 1 angeordnet. An jeder Prüfstation 13, 21 wird der Verfahrvorgang gestoppt bis die jeweilige Prüfung beendet ist. Auch beim Erreichen des Drehtellers 26 durch die Laufrollen 2 kommt es zu einer Unterbrechung des Transportvorgangs.

Am Schlitten 29 ist ferner eine Krafterzeugungsvorrichtung 35 zur Erzeugung von Kraft auf die zu prüfenden Rollen 2, 3 angeordnet. Diese ist ebenfalls in den Figuren 5, 6 und 7 gut zu erkennen. Die Krafterzeugungsvorrichtung 35 umfasst eine auf den Palettenboden 5 drückbare, pneumatisch bewegbare Pressplatte 36. Diese Pressplatte 36 lässt sich vertikal bewegen, sodass diese Kraft auf den Palettenboden 5 und somit auch auf die Rollen 2 und 3 ausüben kann. Durch diese Kraftausübung wird insbesondere die Prüfung der Drehbeweglichkeit der Lenk- und Bockrollen um ihre Rollen-Drehachse verbessert, indem eine zu prüfende Rolle mit simulierter Beladung über die Platte 19 gefahren werden kann. Hierdurch wird eine sehr genaue Ermittlung des Rollwiderstands der zu prüfenden Rollen möglich.

## Patentansprüche

1. System (1) zum Prüfen der Funktionsfähigkeit der Lenkrollen (2) und/oder Bockrollen (3) eines Rollbehälters, insbesondere einer Rollpalette (4) für Lebensmittel- und Supermärkte, umfassend mindestens eine Einrichtung (17) zur Ermittlung der Drehbeweglichkeit der Lenk- und Bockrollen (2, 3) um deren Rollen-Drehachse sowie mindestens eine Einrichtung (21) zur Ermittlung der Schwenkbeweglichkeit der Lenkrollen (2) um eine Vertikalachse.

2. System nach Anspruch 1, **dadurch gekennzeichnet, dass** es sich bei der Einrichtung zur Ermittlung der Drehbeweglichkeit der Lenk- (2) und Bockrollen (3) um deren Rollen-Drehachse um eine Einrichtung zur Messung des Rollwiderstands handelt, insbesondere umfassend einen Kraftaufnehmer, z.B. eine Kraftmessdose (18), sowie vorzugsweise ein mit dem Kraftaufnehmer gekoppeltes Betätigungselement (19).

3. System nach Anspruch 2, **dadurch gekennzeichnet, dass** es sich bei dem mit dem Kraftaufnehmer gekoppelten Betätigungselement um eine schwimmend bewegbare Platte (19) und/oder ein Förderband und/oder rotierbare Rollen handelt.

4. System nach einem der vorhergehenden Ansprüche, **dadurch gekennzeichnet, dass** die Einrichtung (21) zur Ermittlung der Schwenkbeweglichkeit der Lenkrollen (2) um eine Vertikalachse eine Verschwenkvorrichtung zur Verschwenkung der Laufrollen um eine Vertikalachse, insbesondere einen mittels eines Motors rotierbaren Drehteller (22) umfasst, welche Verschwenkvorrichtung mit einer Messvorrichtung zur Messung des Rotationswiderstands, insbesondere mit einer Drehmomentmesszelle (23), die vorzugsweise eine Drehmomentmesswelle umfasst, gekoppelt ist.

5. System nach Anspruch 4, **dadurch gekennzeichnet, dass** die Verschwenkvorrichtung (22) eine Halteeinrichtung (24) zur reversiblen Fixierung einer Lenkrolle (2) aufweist, wobei die Halteeinrichtung (24) vorzugsweise zwei sich gegenüberstehende Haltebacken oder Halteleisten (25) umfasst, die insbesondere pneumatisch aufeinander zu bzw. voneinander weg bewegbar sind.

6. System nach einem der Ansprüche 4 oder 5, **dadurch gekennzeichnet, dass** die Verschwenkvorrichtung, insbesondere der rotierbare Drehteller (22) sowohl im als auch entgegen des Uhrzeigersinns rotierbar ist, wobei eine auf der Verschwenkvorrichtung positionierte Lenkrolle (2) vorzugsweise um 360° in beide Richtungen verschwenkbar ist.

7. System nach einem der vorhergehenden Ansprüche, **gekennzeichnet durch** eine Krafterzeugungsvorrichtung (35) zur Erzeugung von Kraft auf die zu prüfenden Rollen, wobei die Krafterzeugungsvorrichtung (35) insbesondere eine auf einen Boden (5) eines Rollbehälters (4) drückbare, insbesondere pneumatisch bewegbare Pressplatte (36) umfasst.

8. System nach einem der vorhergehenden Ansprüche, **gekennzeichnet durch** mindestens eine Vorrichtung (28) zum Bewegen eines zu prüfenden Rollbehälters (4), insbesondere zum Verfahren eines Rollbehälters (4) auf einer Prüfstrecke (13) des Systems (1), wobei die Vorrichtung (28) vorzugsweise einen auf einer Führungsschiene (30) verfahrbaren Schlitten (29), welcher eine Halteeinrichtung (31) zum Halten des zu verfahrenden Rollbehälters (4) umfasst.

9. System nach einem der vorhergehenden Ansprüche, **gekennzeichnet durch** zwei Führungsschienen (15) zum Führen der zu prüfenden Rollen (2, 3) eines Rollbehälters (4).

10. System nach einem der vorhergehenden Ansprüche, **gekennzeichnet durch** eine Vorrichtung zur Verschwenkung von zu prüfenden Lenkrollen (2) um 180°, wobei diese Vorrichtung vorzugsweise als rotierbarer Drehteller (26) ausgebildet ist.

11. Verfahren zur Prüfung der Funktionsfähigkeit der Lenkrollen (2) und/oder Bockrollen (3) eines Rollbehälters (4), insbesondere mittels eines Systems (1) nach einem der Ansprüche 1 bis 10, umfassend folgende Schritte:
- Ermittlung der Drehbeweglichkeit der Lenk- (2) und/oder Bockrollen (3) um deren Rollen-Drehachse durch Messung des Rollwiderstands der Lenk- und/oder Bockrollen beim Rotieren der Lenk- und/oder Bockrollen auf einem Untergrund (19);
- Ermittlung der Schwenkbeweglichkeit der Lenkrollen (2) um eine Vertikalachse durch Verschwenken der Lenkrollen (2) um eine Vertikalachse und Messung des Rotationswiderstandes beim Verschwenken der Lenkrollen (2) um die Vertikalachse.

12. Verfahren nach Anspruch 11, **dadurch gekennzeichnet, dass** zumindest bei der Ermittlung der Drehbeweglichkeit der Lenk- (2) und/oder Bockrollen (3) um deren Rollen-Drehachse mittels einer Krafterzeugungsvorrichtung (35) eine Kraft auf die zu prüfenden Rollen ausgeübt wird, wobei diese Kraft vorzugsweise dadurch erzeugt wird, dass die Krafterzeugungsvorrichtung, die insbesondere eine bewegbare Pressplatte (36) umfasst, auf eine Oberseite eines Bodens (5) des Rollbehälters (4) gepresst wird.

13. Verfahren nach einem der Ansprüche 11 oder 12, **dadurch gekennzeichnet, dass** ein Rollbehälter (4) zur Prüfung der Funktionsfähigkeit seiner Rollen (2, 3) mittels eines horizontal verfahrbaren Führungsschlittens (29) auf einem Untergrund (13) bewegt wird, wobei die Rollen (2, 3) des Rollbehälters (4) vorzugsweise auf dem Untergrund mittels Führungselementen, insbesondere mittels Führungsschienen (15) geführt werden.

14. Verfahren nach einem der Ansprüche 11 bis 13, **dadurch gekennzeichnet, dass** die Lenkrollen (2) zur Änderung der Laufrichtung um 180° um eine Vertikalachse verschwenkt werden und anschließend in die entgegengesetzte Richtung verfahren werden.

15. Verfahren nach einem der Ansprüche 11 bis 14, **dadurch gekennzeichnet, dass** das Messen des Rotationswiderstands beim Verschwenken der Lenkrollen (2) um die Vertikalachse mittels einer Messvorrichtung zur Messung des Rotationswiderstands, insbesondere mittels einer Drehmomentmesszelle (23), die vorzugsweise eine Drehmomentmesswelle umfasst, mittels eines überfederten Stößels mit Endschalter, durch ein Gegenlager des Motors mit beliebigem Kraftaufnehmer, mittels Dehnmessstreifen und/oder durch Messen der Stromaufnahme eines Motors erfolgt.
